# EUROPEAN PATENT SPECIFICATION

(11) **EP 4 223 458 B1**
(45) Date of publication and mention of the grant of the patent: **19.06.2024**
(21) Application number: 21766370.7
(22) Date of filing: 19.04.2021
(51) Int. Cl.: B25H 1/02, G01B 5/00

(54) **ELECTRIC HIGH-PRECISION TWO-DIMENSIONAL OBJECT CARRYING TABLE**
ELEKTRISCHER HOCHPRÄZISER ZWEIDIMENSIONALER OBJEKTTRÄGER-TISCH
TABLE DE TRANSPORT D'OBJETS BIDIMENSIONNELS À HAUTE PRÉCISION ÉLECTRIQUE

(30) Priority: 29.09.2020 CN 202022195202 U
(43) Date of publication of application: 09.08.2023
(73) Proprietor: CHOTEST TECHNOLOGY INC., Shenzhen, Guangdong 518000 (CN)
(72) Inventor: XU, Ai Wen, Shenzhen, Guangdong 518000 (CN); ZHANG, He Jun, Shenzhen, Guangdong 518000 (CN)
(74) Representative: Isern Patentes y Marcas S.L.
(86) International application number: PCT/CN2021/088148
(87) International publication number: WO 2022/068181

(56) References cited:
- CN-A- 101 118 377
- CN-A- 101 567 223
- CN-A- 103 134 802
- CN-A- 103 134 802
- CN-A- 103 206 595
- CN-A- 103 252 761
- CN-A- 111 075 831
- CN-A- 112 173 608
- US-A- 4 575 942
- US-A- 5 699 621
- US-A1- 2005 018 284

## Description

### TECHNICAL FIELD

The present utility model relates to a stage, and in particular, to an electric high-precision 2D stage.

### BACKGROUND

In the field of image measurement, the demands for dimension measurement of various products and workpieces to be inspected are greatly increased, and there are many inspection categories. For the measuring instruments required, the requirements for placing workpieces to be inspected in batches through a 2D stage need to be met, to implement quick, precise, and stable motion, thereby efficiently completing the measurement of products, so as to achieve the purpose of rapid production and inspection.

The precision and field of vision of a lens of a flash measuring instrument are limited by various processing and manufacturing capabilities during production, and therefore it is impossible to manufacture a high-precision lens with an extra-large field of vision for an ultra-long workpiece to complete one-time imaging measurement, which will also increase the measurement cost and have little significance in the production of products. Therefore, during measurement of the size of a workpiece by using a flash measuring instrument and an imaging instrument, if the size of the workpiece to be inspected exceeds the limited field of vision of the lens, it is necessary to move the workpiece precisely by using a 2D stage as the carrier in actual measurement, acquire images from of the workpiece in sections, and then splice the images into a whole, to measure the actual size of the workpiece.

However, the existing 2D stages have a bulky structure and are not light and concise enough. The driving and connecting structures of X and Y axes are all hard connected, a hard connected structure has high requirements on the process of instrument production and assembly, and the assembly efficiency of the stage is low, which brings inconvenience to the rapid implementation of instrument production in batches. In addition, the existing 2D stages have a relatively low precision, are easy to wear, offset, or the like after long-term use, resulting in the reduction of the precision and the poor stability of the precision, and therefore cannot meet the measurement requirements of the flash measuring instrument and the imaging instrument.

Concerning the prior art, CN 103134802 A discloses a two-dimensional motion device used for optical detection. US 2005/0018284 A1 discloses a two-axis stage for a microscope. US 4,575,942 discloses a two-dimensional moving apparatus.

### SUMMARY

To resolve the problem in the existing technology, the present utility model provides an electric high-precision 2D stage.

The present utility model provides an electric high-precision 2D stage, including: a bottom layer stage module, a middle layer stage module, and an upper layer stage module, where the bottom layer stage module is connected to the middle layer stage module through an X-axis cross guide rail, the middle layer stage module is connected to the upper layer stage module through a Y-axis cross guide rail, the bottom layer stage module is connected to the middle layer stage module through an X-axis feeding mechanism, the X-axis feeding mechanism includes an X-axis driving unit and an X-axis flexible lead screw mechanism, the X-axis driving unit is connected to the X-axis flexible lead screw mechanism, the X-axis flexible lead screw mechanism includes an X-direction lead screw, an X-axis nut block, an X-direction push block, an X-dome mounting connecting block, a ball push rod, and a ball head plunger, the X-direction lead screw is connected to the X-axis driving unit, the X-axis nut block is mounted on the X-direction lead screw, the X-axis nut block is connected to the X-direction push block, an X-direction slot is provided on the X-dome mounting connecting block, the ball push rod and the ball head plunger are mounted on two sides of the X-direction slot, the X-direction push block is inserted in the X-direction slot, two sides of the X-direction push block are in point contact with the ball push rod and the ball head plunger, respectively, the middle layer stage module is connected to the upper layer stage module through a Y-axis feeding mechanism, and the Y-axis feeding mechanism and the X-axis feeding mechanism have a same structure but opposite mounting directions.

As a further improvement of the present utility model, the X-axis driving unit and the X-direction lead screw are both mounted on the bottom layer stage module, and the X-dome mounting connecting block is mounted on the middle layer stage module.

As a further improvement of the present utility model, the bottom layer stage module is provided with an X-direction linear guide rail, an X-direction sliding block is connected to a bottom portion of the middle layer stage module, and the X-direction sliding block is slidably connected to the X-direction linear guide rail.

As a further improvement of the present utility model, the middle layer stage module is provided with a Y-direction linear guide rail, a Y-direction sliding block is connected to a bottom portion of the upper layer stage module, and the Y-direction sliding block is slidably connected to the Y-direction linear guide rail.

As a further improvement of the present utility model, the bottom layer stage module is provided with an X-axis position detection unit and the middle layer stage module is provided with a Y-axis position detection unit.

As a further improvement of the present utility model, the bottom layer stage module is provided with an X-axis high-precision glass grating and the middle layer stage module is provided with a Y-axis high-precision glass grating.

As a further improvement of the present utility model, the ball head plunger is in resilient point contact with the X-direction push block and the ball push rod is in rigid point contact with the X-direction push block.

The present utility model has the advantages that the solution adopts a flexible connecting structure, thereby reducing the assembly requirement, and improving the assembly efficiency and the precision, and can still maintain a good precision stability after long-term use.

### BRIEF DESCRIPTION OF THE ACCOMPANYING DRAWINGS

FIG. 1 is a schematic diagram of an electric high-precision 2D stage of the present utility model;
FIG. 2 is an exploded view of an electric high-precision 2D stage of the present utility model;
FIG. 3 is a front view of an electric high-precision 2D stage of the present utility model;
FIG. 4 is a cross sectional view of the structure along E-E in FIG. 3;
FIG. 5 is a cross sectional view of the structure along F-F in FIG. 3;
FIG. 6 is a partially enlarged view of the position A in FIG. 4;
FIG. 7 is a partially enlarged view of the position B in FIG. 5;
FIG. 8 is a partially enlarged view of the position C in FIG. 3;
FIG. 9 is a cross sectional view of a bottom layer stage module of an electric high-precision 2D stage of the present utility model;
FIG. 10 is a cross sectional view of the structure along H-H in FIG. 9; and
FIG. 11 is a cross sectional view of the structure along I-I in FIG. 9.

### DETAILED DESCRIPTION OF THE EMBODIMENTS

The present utility model is further explained below with reference to the accompanying drawings and specific embodiments.

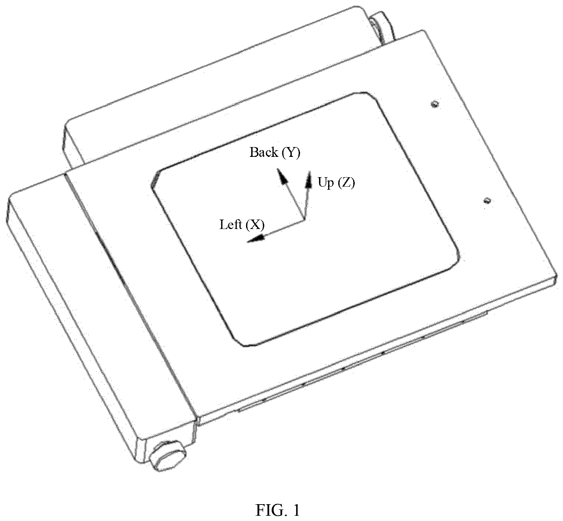

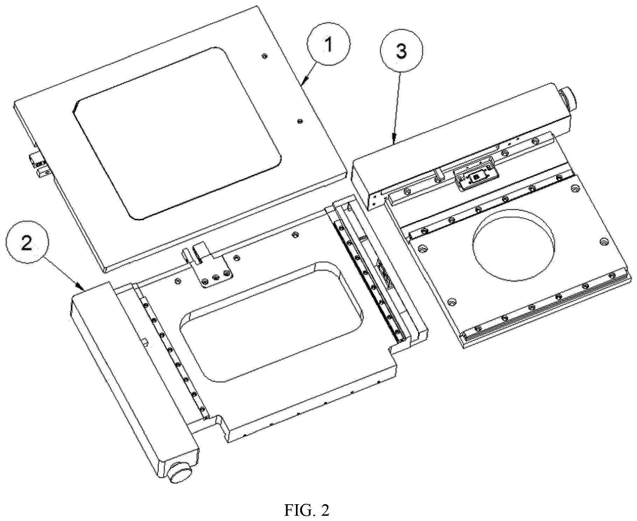

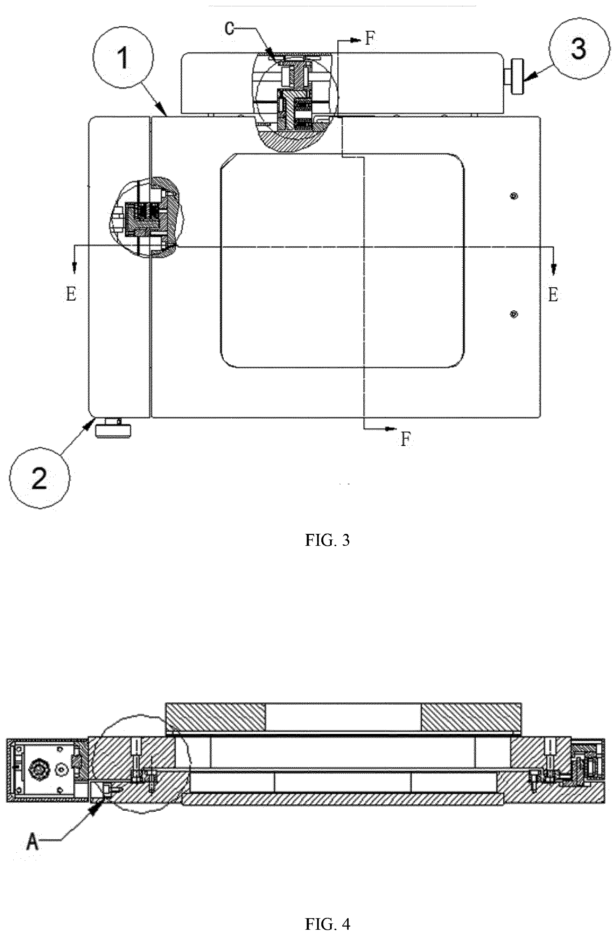

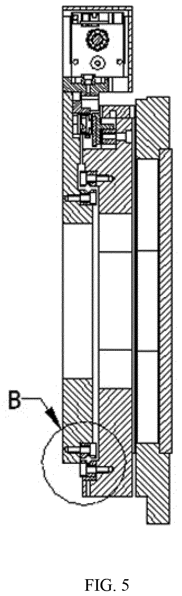

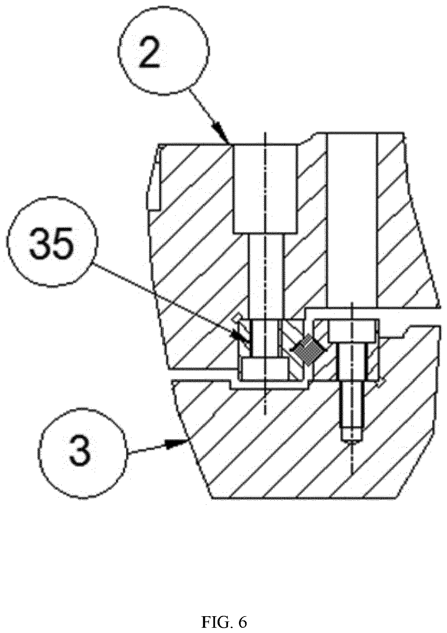

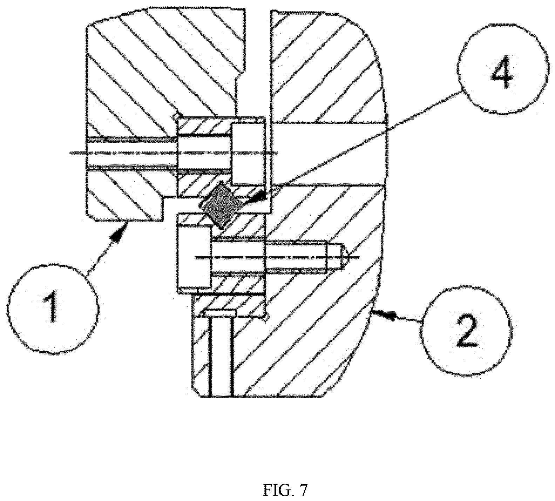

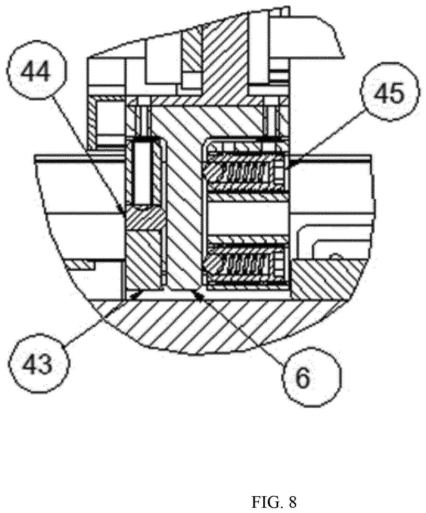

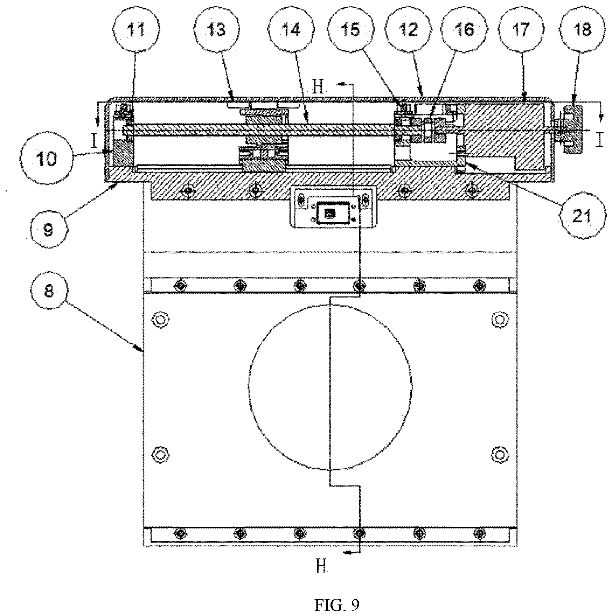

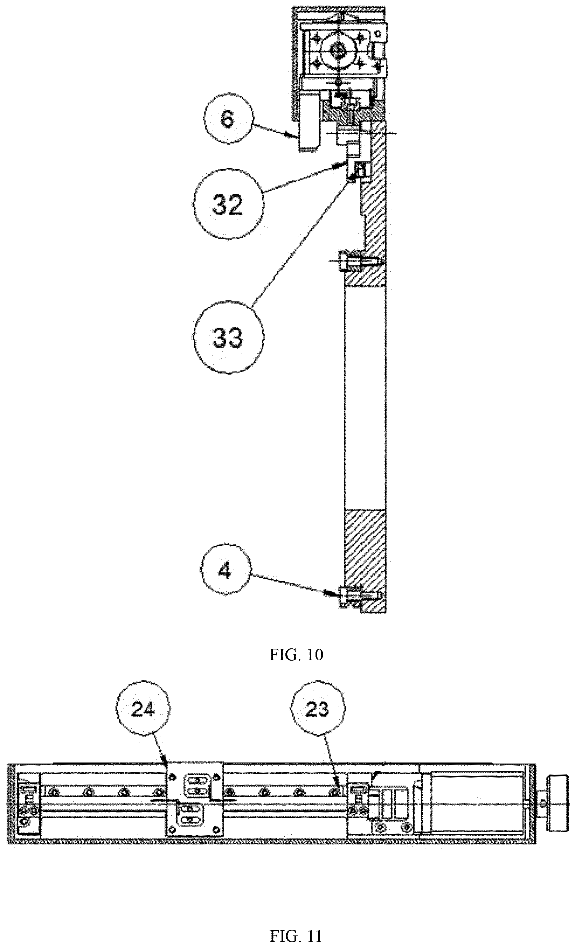

As shown in FIG. 1 to FIG. 11, an electric high-precision 2D stage is mainly composed of three modules, that is, a bottom layer stage module 1, a middle layer stage module 2, and an upper layer stage module 3. The bottom layer stage module 1 is a main supporting structure of the whole utility model. The bottom layer stage module 1 and the middle layer stage module 2 are assembled and combined by using a pair of X-axis cross guide rails 4, to form one-dimensional line contact moving pair with the bottom layer stage module 1 as the main supporting structure and the middle layer stage module 2 being capable of moving right and left in the X direction. The upper layer stage module 3 is a moving part in the uppermost layer of the whole module, which is similarly assembled and combined with the middle layer stage module 2 by using a pair of Y-axis cross guide rails 35, to form a one-dimensional line contact moving pair capable of moving back and forth in the Y direction. The middle layer stage module 2 is a moving part in the X direction, and is also a main supporting structure module of the upper layer stage module 3 in the Y direction.

The orthogonal high-precision structural combination design of two groups of cross guide rails is an important premise. The whole structural module design integrates a flexible connecting structure design between a moving pair formed by two groups of spiral transmissions and cross guide rails by using a linear guide rail as a moving guide and a common stepping motor as a drive, and a combined structural design of two groups of high-precision glass gratings, thereby forming an electric 2D stage capable of simultaneously performing high-precision linear displacement in X and Y directions.

The assembly structure of the bottom layer stage module 1 and the middle layer stage module 2 is the same as that of the middle layer stage module 2 and the upper layer stage module 3, but is in an opposite direction. Therefore, to avoid duplication in the description, the assembly structure of the bottom layer stage module 1 and the middle layer stage module 2 is used, in this embodiment, as an example for description.

In the composition of the bottom layer stage module 2, a stage bottom plate 8 exerts a fixing and supporting function in this module, and all other structural members are based on the stage bottom plate 8 for mounting and securing. A half of the X-axis cross guide rail 4 is mounted on the stage bottom plate 8. The X-direction linear guide rail 23 is mounted in the X-axis fixing plate 9 through a screw. An X-direction lead screw 14, two deep groove ball bearings 11, an X-bearing seat 10, a stage X-motor seat 21, a coupling 16, a stepping motor 17, a handwheel 18, and an X-axis nut block 24 are arranged in series in the same axis. The X-direction lead screw 14 is secured on the X-axis nut block 24, which is then secured on an X-direction push block 6 (note: the X-direction push block 6 is a structural member for establishing flexible connection with the middle layer stage module 2), by which the whole structure is jointly secured on a sliding block secured on the X-direction linear guide rail 23, and in addition, the X-direction lead screw 14 is secured on the X-axis fixing plate 9 by using the X-axis bearing seat 10 and the stage X-motor seat 21 as supports of two ends of the X-direction lead screw 14. An X-axis rear cover is secured on a right end portion of the X-axis fixing plate 9. Two photoelectric switches 15 are respectively arranged on the X-bearing seat 10 and the stage X-motor seat 21, to form two electronic sensing points, and two sensing pieces 13 are mounted on side surfaces of the X-axis nut block 24 as structural members for triggering of the two electronic sensing points. An X-axis housing 12 is secured on the X-axis fixing plate 9 through a screw. The X-axis fixing plate 9, together with the above-mentioned structural members, is assembled into a linear moving mechanism which is driven by the stepping motor 17, rotated by the X-direction lead screw 14, and guided by the X-direction linear guide rail 23, and in which start and stop positions are sensed by the two photoelectric switches 15. In addition, the linear moving mechanism is secured at a rear portion of the stage bottom plate 8 through the X-axis fixing plate 9. A reading head 33 is mounted inside an X-reading head seat 32, and both are mounted together in a rear slot of the stage bottom plate 8.

The X-direction push block 6 is inserted into an X-direction slot on the X-dome mounting connecting block 43. A ball push rod 44 and a ball head plunger 45 are mounted on two sides of the X-direction slot. The two sides of the X-direction push block 6 are respectively in point contact with the ball push rod 44 and the ball head plunger 45. The ball head plunger 45 is in resilient point contact with the X-direction push block 6. The ball push rod 44 is in rigid point contact with the X-direction push block 6, to form a flexible force transmission connection between the bottom layer stage module 1 and the middle layer stage module 2. The stepping motor 17 may drive, through the X-direction lead screw 14, the X-axis nut block 24 to perform X-direction translation, and then the X-axis nut block 24 pushes, through the X-direction push block 6, the X-dome mounting connecting block 43 to perform X-direction translation, to finally push the middle layer stage module 2 to perform X-direction translation.

By introducing half-pair cross guide rail mounting, a hard way for the assembly and combination of the bottom layer stage module 1 and the middle layer stage module 2 is provided. The linear transmission mechanism is formed by using five standardized structural members of the linear guide rail, the lead screw, the coupling, the stepping motor, and the deep groove ball bearing in combination with the X-direction push block 6. In addition, the structural combination of the flexible connecting structural member for mounting the X-direction push block 6 with the X-axis cross guide rail 4 is introduced, thereby laying a foundation for the key technical points of the whole utility model.

The present utility model provides an electric high-precision 2D stage, in which the orthogonal high-precision structural combination design of two pairs of cross guide rails is an important premise. The whole structural module design integrates a flexible connecting structure design between a moving pair formed by two pairs of spiral transmissions and cross guide rails by using a linear guide rail as a moving guide and a common stepping motor as a drive, and a combined structural design of two groups of high-precision glass gratings, thereby forming an electric 2D stage capable of simultaneously performing high-precision linear displacement in X and Y directions.

The present utility model provides an electric high-precision 2D stage and has the following advantages:
1) As a high-precision linear 2D stage, the stage can be operated automatically or manually, thereby saving time and labor and reducing measurement cost; and the production and assembly of the stages in batches are more stable, thereby reducing processing requirements and assembly difficulties and shortening a delivery period.
2) Simple modular concise design, with a low manufacturing cost, aesthetic of appearance, and light weight, without manual operation, and being convenient use.
3) Different cross guide rails are selected to be used and therefore a relatively large external load can be borne while the high-precision measurement requirements can still be met. Between the moving part and the driving shaft, the two shafts both adopt the structure design of flexible connection, thereby eliminating the impact of an external force in the direction of the moving shaft of the machine. The stage is used for a long time without worrying about the change of the running precision of the cross guide rail and the moving precision of the stage, thus providing a strong guarantee for the stability of the long-term precision of the present utility model and enabling the measurement precision of the whole machine to be more stable.

The foregoing content is a further detailed description of the present utility model in combination with specific preferred embodiments and it cannot be considered that the specific implementation of the present utility model is only limited to these descriptions. For those of ordinary skill in the art to which the present utility model pertains, several simple deductions or substitutions can be made without departing from the conception of the present utility model. The scope of the invention is defined by the appended claims.

## Claims

1. An electric high-precision 2D stage, comprising: a bottom layer stage module (3), a middle layer stage module (2), and an upper layer stage module (1), wherein the bottom layer stage module is connected to the middle layer stage module through an X-axis cross guide rail (4), the middle layer stage module is connected to the upper layer stage module through a Y-axis cross guide rail (35), the bottom layer stage module is connected to the middle layer stage module through an X-axis feeding mechanism, the X-axis feeding mechanism comprises an X-axis driving unit and an X-axis flexible lead screw mechanism, the X-axis driving unit is connected to the X-axis flexible lead screw mechanism, the X-axis flexible lead screw mechanism comprises an X-direction lead screw (14), an X-axis nut block (24), an X-direction push block (6), an X-dome mounting connecting block (43), a ball push rod (44), and a ball head plunger (45), the X-direction lead screw is connected to the X-axis driving unit, the X-axis nut block is mounted on the X-direction lead screw, the X-axis nut block is connected to the X-direction push block, an X-direction slot is provided on the X-dome mounting connecting block, the ball push rod and the ball head plunger are mounted on two sides of the X-direction slot, the X-direction push block is inserted in the X-direction slot, two sides of the X-direction push block are in point contact with the ball push rod and the ball head plunger, respectively, the middle layer stage module is connected to the upper layer stage module through a Y-axis feeding mechanism, and the Y-axis feeding mechanism and the X-axis feeding mechanism have a same structure but opposite mounting directions.

2. The electric high-precision 2D stage according to claim 1, wherein the X-axis driving unit and the X-direction lead screw are both mounted on the bottom layer stage module, and the X-dome mounting connecting block is mounted on the middle layer stage module.

3. The electric high-precision 2D stage according to claim 1, wherein the bottom layer stage module is provided with an X-direction linear guide rail, an X-direction sliding block is connected to a bottom portion of the middle layer stage module, and the X-direction sliding block is slidably connected to the X-direction linear guide rail.

4. The electric high-precision 2D stage according to claim 1, wherein the middle layer stage module is provided with a Y-direction linear guide rail, a Y-direction sliding block is connected to a bottom portion of the upper layer stage module, and the Y-direction sliding block is slidably connected to the Y-direction linear guide rail.

5. The electric high-precision 2D stage according to claim 1, wherein the bottom layer stage module is provided with an X-axis position detection unit and the middle layer stage module is provided with a Y-axis position detection unit.

6. The electric high-precision 2D stage according to claim 1, wherein the bottom layer stage module is provided with an X-axis high-precision glass grating and the middle layer stage module is provided with a Y-axis high-precision glass grating.

7. The electric high-precision 2D stage according to claim 1, wherein the ball head plunger is in resilient point contact with the X-direction push block and the ball push rod is in rigid point contact with the X-direction push block.

## Patentansprüche

1. Elektrischer hochpräziser2D-Objekttisch, der Folgendes umfasst: ein Objekttischmodul (3) der unteren Ebene, ein Objekttischmodul (2) der mittleren Ebene, ein Objekttischmodul (1) der oberen Ebene, wobei das Objekttischmodul der unteren Ebene über eine X-Achsen-Querführungsschiene (4) mit dem Objekttischmodul der mittleren Ebene verbunden ist, das Objekttischmodul der mittleren Ebene über eine Y-Achsen-Querführungsschiene (35) mit dem Objekttischmodul der oberen Ebene verbunden ist, das Objekttischmodul der unteren Ebene über einen X-Achsen-Zufuhrmechanismus mit dem Objekttischmodul der mittleren Ebene verbunden ist, der X-Achsen-Zufuhrmechanismus eine X-Achsen-Antriebseinheit und einen flexiblen X-Achsen-Leitspindelmechanismus umfasst, die X-Achsen-Antriebseinheit mit dem flexiblen X-Achsen-Leitspindelmechanismus verbunden ist, der flexible X-Achsen-Leitspindelmechanismus eine Leitspindel (14) für die X-Richtung, einen X-Achsen-Mutternblock (24), einen Schubblock (6) für die X-Richtung, einen X-Kuppelmontageverbindungsblock (43), eine Kugelschubstange (44) und einen Kugelkopfkolben (45) umfasst, die Leitspindel für die X-Richtung mit der X-Achsen-Antriebseinheit verbunden ist, der X-Achsen-Mutternblock an der Leitspindel für die X-Richtung montiert ist, derX-Achsen-Mutternblock mit dem Schubblock für die X-Richtung verbunden ist, am X-Kuppelmontageverbindungsblock ein Schlitz in X-Richtung bereitgestellt ist, die Kugelschubstange und der Kugelkopfkolben auf zwei Seiten des Schlitzes in X-Richtung montiert sind, der Schubblock für die X-Richtung in den Schlitz in X-Richtung eingesetzt ist, zwei Seiten des Schubblocks für die X-Richtung mit der Kugelschubstange bzw. dem Kugelkopfkolben in Punktkontakt sind, das Objekttischmodul der mittleren Ebene über einen Y-Achsen-Zufuhrmechanismus mit dem Objekttischmodul der oberen Ebene verbunden ist und der Y-Achsen-Zufuhrmechanismus und der X-Achsen-Zufuhrmechanismus eine selbe Struktur, aber entgegengesetzte Montagerichtungen aufweisen.

2. Elektrischer hochpräziser 2D-Objekttisch nach Anspruch 1, wobei die X-Achsen-Antriebseinheit und die Leitspindel für die X-Richtung beide am Objekttischmodul der unteren Ebene montiert sind und der X-Kuppelmontageverbindungsblock am Objekttischmodul der mittleren Ebene montiert ist.

3. Elektrischer hochpräziser 2D-Objekttisch nach Anspruch 1, wobei das Objekttischmodul der unteren Ebene mit einer linearen Führungsschiene für die X-Richtung versehen ist, ein Gleitblock für die X-Richtung mit einem unteren Abschnitt des Objekttischmoduls der mittleren Ebene verbunden ist und der Gleitblock für die X-Richtung mit der linearen Führungsschiene für die X-Richtung gleitbar verbunden ist.

4. Elektrischer hochpräziser 2D-Objekttisch nach Anspruch 1, wobei das Objekttischmodul der mittleren Ebene mit einer linearen Führungsschiene für die Y-Richtung versehen ist, ein Gleitblock für die Y-Richtung mit einem unteren Abschnitt des Objekttischmoduls der oberen Ebene verbunden ist und der Gleitblock für die Y-Richtung mit der linearen Führungsschiene für die Y-Richtung gleitbar verbunden ist.

5. Elektrischer hochpräziser 2D-Objekttisch nach Anspruch 1, wobei das Objekttischmodul der unteren Ebene mit einer X-Achsen-Positionsdetektionseinheit versehen ist und das Objekttischmodul der mittleren Ebene mit einer Y-Achsen-Positionsdetektionseinheit versehen ist.

6. Elektrischer hochpräziser 2D-Objekttisch nach Anspruch 1, wobei das Objekttischmodul der unteren Ebene mit einem X-Achsen-Hochpräzisionsglasgitter versehen ist und das Objekttischmodul der mittleren Ebene mit einem Y-Achsen-Hochpräzisionsglasgitter versehen ist.

7. Elektrischer hochpräziser 2D-Objekttisch nach Anspruch 1, wobei der Kugelkopfkolben mit dem Schubblock für die X-Richtung in elastischem Punktkontakt ist und die Kugelschubstange mit dem Schubblock für die X-Richtung in starrem Punktkontakt ist.

## Revendications

1. Une platine 2D électrique de haute précision, comprenant : un module d'étage de couche inférieure (3), un module d'étage de couche intermédiaire (2) et un module d'étage de couche supérieure (1), dans lequel le module d'étage de couche inférieure est connecté au module d'étage de couche intermédiaire par l'intermédiaire d'un rail de guidage transversal d'axe X (4), le module d'étage de couche intermédiaire est connecté au module d'étage de couche supérieure par l'intermédiaire d'un rail de guidage transversal d'axe Y (35), le module d'étage de couche inférieure est connecté au module d'étage de couche intermédiaire via un mécanisme d'alimentation sur axe X, le mécanisme d'alimentation sur l'axe X comprend une unité d'entraînement sur l'axe X et un mécanisme à vis mère flexible sur l'axe X, l'unité d'entraînement de l'axe X est connectée au mécanisme à vis mère flexible de l'axe X, le mécanisme à vis mère flexible d'axe X comprend une vis mère de direction X (14), un bloc d'écrou d'axe X (24), un bloc poussoir dans la direction X (6), un bloc de connexion de montage en dôme en X (43), une tige de poussée à bille (44) et un piston à tête sphérique (45), la vis mère de direction X est connectée à l'unité d'entraînement de l'axe X, le bloc d'écrou de l'axe X est monté sur la vis mère de direction X, le bloc d'écrou de l'axe X est connecté au bloc poussoir de direction X, une fente dans la direction X est prévue sur le bloc de connexion de montage du dôme X, la tige de poussée à bille et le piston à tête sphérique sont montés sur deux côtés de la fente dans la direction X, le bloc poussoir de direction X est inséré dans la fente de direction X, deux côtés du bloc poussoir dans la direction X sont en contact ponctuel avec la tige de poussée à bille et le piston à tête sphérique, respectivement, le module d'étage de couche intermédiaire est connecté au module d'étage de couche supérieure par l'intermédiaire d'un mécanisme d'alimentation sur axe Y, et le mécanisme d'alimentation sur axe Y et le mécanisme d'alimentation sur axe X ont une même structure mais des directions de montage opposées.

2. Platine électrique 2D de haute précision selon la revendication 1, l'unité d'entraînement de l'axe X et la vis mère de direction X étant toutes deux montées sur le module d'étage de couche inférieure, et le bloc de connexion de montage de dôme X étant monté sur le module d'étage de couche intermédiaire.

3. Platine électrique 2D de haute précision selon la revendication 1, dans lequel le module d'étage de couche inférieure est pourvu d'un rail de guidage linéaire dans la direction X, un bloc coulissant dans la direction X est relié à une partie inférieure du module d'étage de couche intermédiaire, et le bloc coulissant dans la direction X est relié de manière coulissante au rail de guidage linéaire dans la direction X.

4. Platine électrique 2D de haute précision selon la revendication 1, dans lequel le module d'étage de couche intermédiaire est pourvu d'un rail de guidage linéaire dans la direction Y, un bloc coulissant dans la direction Y est relié à une partie inférieure du module d'étage de couche supérieure, et le bloc coulissant dans la direction Y est relié de manière coulissante au rail de guidage linéaire dans la direction Y.

5. Platine électrique 2D de haute précision selon la revendication 1, le module d'étage de couche inférieure étant pourvu d'une unité de détection de position sur l'axe X et le module d'étage de couche intermédiaire étant doté d'une unité de détection de position sur l'axe Y.

6. Platine électrique 2D de haute précision selon la revendication 1, le module d'étage de couche inférieure étant pourvu d'un réseau de verre de haute précision d'axe X et le module d'étage de couche intermédiaire étant doté d'un réseau de verre de haute précision d'axe Y.

7. Platine électrique 2D de haute précision selon la revendication 1, le piston à tête sphérique étant en contact ponctuel élastique avec le bloc poussoir dans la direction X et la tige de poussée à bille étant en contact ponctuel rigide avec le bloc poussoir dans la direction X.
